# FASCICULE DE BREVET EUROPEEN

(11) **EP 3 012 499 B1**
(45) Date de publication et mention de la délivrance du brevet: **17.03.2021**
(21) Numéro de dépôt: 15191294.6
(22) Date de dépôt: 23.10.2015
(51) Int. Cl.: F16K 37/00, E03B 9/04, F16K 15/06, F16K 27/02, A62C 35/20, E03B 7/07, G01M 3/28

(54) **SYSTEME DE SURVEILLANCE DE DISTRIBUTION D'EAU ET DISPOSITIF DE DISTRIBUTION D'EAU ASSOCIE**
VERFAHREN ZUR ÜBERWACHUNG DER WASSERVERTEILUNG, UND ENTSPRECHENDE WASSERVERTEILUNGSVORRICHTUNG
SYSTEM FOR MONITORING WATER DISPENSING AND ASSOCIATED WATER DISPENSING DEVICE

(30) Priorité: 24.10.2014 FR 1460227
(43) Date de publication de la demande: 27.04.2016
(73) Titulaire: Bayard, 69330 Meyzieu (FR)
(72) Inventeur: PIOT, Raphaël, Marie, Emeric, Hervé, 69003 LYON (FR); THETIOT, Rodolphe, Serge, 69100 VILLEURBANNE (FR); LE MARREC, Lucas, Alexandre, Sébastien, 69004 LYON (FR)
(74) Mandataire: Weber, Jean-François

(56) Documents cités:
- EP-A2- 0 233 554
- DE-A1-102008 011 273
- GB-A- 2 040 406
- US-A- 2 202 211
- US-A1- 2003 223 882
- US-A1- 2013 314 239
- US-A1- 2014 182 717

## Description

L'invention est relative au domaine général des dispositifs de distribution d'eau tels que les bouches, ou les poteaux, de lavage de chaussée, d'arrosage, d'incendie, de puisage, ou d'irrigation, en particulier aux systèmes de surveillance de l'état, du fonctionnement ou de l'utilisation de tels dispositifs de distribution d'eau, permettant par exemple de surveiller la consommation d'eau de ces derniers.

La présente invention concerne plus particulièrement un système de surveillance de la distribution d'eau d'un dispositif de distribution d'eau du genre poteau ou bouche, de lavage, d'arrosage, ou d'incendie, ledit dispositif de distribution comprenant un conduit de sortie par l'intermédiaire duquel de l'eau de distribution est destinée à être distribuée.

La présente invention concerne également un dispositif de distribution d'eau équipé d'un système de surveillance.

La législation tend à évoluer dans un sens restrictif concernant la régulation de la consommation d'eau potable. En particulier, les exploitants de réseaux d'eau potable ont dorénavant pour obligation d'optimiser le rendement desdits réseaux d'eau afin que ce dernier dépasse 85 %. On entend par rendement d'un réseau le rapport entre la quantité d'eau effectivement distribuée par le réseau et la quantité d'eau fournie au réseau. Ce rendement peut être amélioré en réduisant les pertes d'eau causées par exemple par les fuites, les vols d'eau, et les utilisations indues du réseau d'eau. Dans le cas des bouches de lavage ou d'arrosage de chaussée et autres points de puisages d'eau disposés le plus souvent sur la voie publique tels que les poteaux d'incendie, il peut ainsi s'avérer utile et nécessaire de surveiller et de mesurer ces pertes d'eau dans le but d'y remédier.

Pour répondre à ce besoin, il a été proposé de mettre en oeuvre un capteur de pression au sein d'une conduite du dispositif de distribution, au voisinage de la sortie de distribution d'eau, afin de détecter la présence d'une pression dynamique d'eau dans ladite conduite ce qui permet ainsi de détecter la présence d'une circulation d'eau. Sur la base de la durée de la circulation d'eau dans ladite conduite, il est ainsi possible d'évaluer la quantité d'eau débitée, dans l'hypothèse où le débit d'eau fourni par le dispositif de distribution est sensiblement constant lorsque de l'eau est distribuée.

Un tel système connu donne généralement satisfaction, et permet d'obtenir une estimation approximative de la consommation d'eau du dispositif de distribution. Toutefois, en l'absence d'opérations de maintenance régulières, le capteur de pression décrit ci-avant est susceptible de présenter des défauts de fiabilité, en particulier compte-tenu de la rudesse de l'environnement dans lequel il est placé. En effet, les bouches d'arrosage étant généralement placées en extérieur dans l'espace public, le capteur de pression, qui constitue un organe relativement fragile, est susceptible d'être mis hors d'état de fonctionner par les intempéries, et en particulier par le gel, ou les pollutions du type poussières, ou encore parfois par des dégradations volontaires ou non. Il est ainsi nécessaire, le plus souvent, de procéder à des opérations de maintenance régulières du capteur sur place, ce qui représente bien entendu un coût substantiel. Par ailleurs, le capteur de pression peut être, dans certains cas, source de détections de circulation d'eau indues : en effet, de l'eau non circulante peut être présente au niveau du capteur avec une pression statique.

Le document GB-2 040 406 A décrit un système de surveillance du débit d'un fluide dans un circuit de tuyauterie. Le document EP 0 233 554 A2 décrit un dispositif permettant de garantir une pression d'extraction constante dans un système de distribution d'eau autour d'une valeur de pression prédéterminée. Le document DE-10 2008 011 273 A1 décrit un dispositif conçu pour permettre la mesure en continu du débit d'un liquide circulant dans un circuit. Le document US 2003/0223882 A1 décrit un système de surveillance de pompe et de commande de flux renseignant directement sur le flux de décharge de pompes volumétriques ou de pompes d'injection à membrane.

Les objets assignés à l'invention visent par conséquent à remédier aux inconvénients susmentionnés, en proposant un nouveau système de surveillance et un nouveau dispositif de distribution d'eau particulièrement robustes.

Un autre objet de l'invention vise à proposer un nouveau système de surveillance, et un nouveau dispositif de distribution d'eau, d'une fiabilité élevée et nécessitant peu de maintenance.

Un autre objet de l'invention vise à proposer un nouveau système de surveillance, et un nouveau dispositif de distribution d'eau, particulièrement polyvalents, adaptés aux structures existantes, et faciles à mettre en oeuvre.

Un autre objet de l'invention vise à proposer un nouveau système de surveillance, et un nouveau dispositif de distribution d'eau, dont le coût de conception et de fabrication est particulièrement faible.

Un autre objet de l'invention vise à proposer un nouveau système de surveillance, et un nouveau dispositif de distribution d'eau, qui, tout en permettant de surveiller la consommation d'eau, permettent également d'améliorer la longévité du dispositif de distribution d'eau.

Un autre objet de l'invention vise à proposer un nouveau système de surveillance, et un nouveau dispositif de distribution d'eau, de consommation énergétique particulièrement faible.

Un autre objet de l'invention vise à proposer un nouveau système de surveillance, et un nouveau dispositif de distribution d'eau, de conception particulièrement compacte et discrète.

Les objets assignés à l'invention sont atteints à l'aide d'un système de surveillance de la distribution d'eau d'un dispositif de distribution d'eau du genre poteau ou bouche, de lavage, d'arrosage, ou d'incendie, ledit dispositif de distribution comprenant un conduit de sortie par l'intermédiaire duquel de l'eau de distribution est destinée à être distribuée, le système de surveillance étant caractérisé en ce qu'il comprend :
- un système de clapet conçu pour être monté au sein du conduit de sortie et étant conçu pour se déplacer entre :
   o une position ouverte sous l'action d'un débit d'eau de distribution dans le conduit de sortie, lorsque ledit débit d'eau est supérieur à un seuil de débit prédéterminé, et
   o une position fermée lorsque le débit d'eau est inférieur audit seuil de débit, ledit système de clapet étant conçu pour obstruer partiellement le conduit de sortie en position fermée le système de clapet étant conçu pour que ladite obstruction ne soit pas étanche,
- un moyen de détection apte à détecter au moins l'une des deux positions ouverte ou fermée du système de clapet afin de fournir une information de position détectée, et
- un moyen de surveillance de la distribution d'eau conçu pour, sur la base de l'information de position détectée par ledit moyen de détection, générer un message représentatif de la distribution d'eau par ledit dispositif de distribution,

ledit moyen de surveillance comprenant un moyen de mesure du temps pendant lequel le système de clapet est en position ouverte.

Les objets assignés à l'invention sont également atteints à l'aide d'un dispositif de distribution d'eau équipé d'un système de surveillance selon l'invention.

D'autres particularités et avantages de l'invention apparaîtront et ressortiront plus en détails à la lecture de la description faite ci-après, en référence aux dessins annexés, donnés uniquement à titre d'exemple illustratif et non limitatif, dans lesquels :
- La figure 1 illustre, selon une vue en perspective en coupe longitudinale, un premier exemple de réalisation d'un système de surveillance d'un dispositif de distribution d'eau, comprenant un système de clapet qui est représenté dans une position fermée.
- La figure 2 représente, selon une vue en coupe longitudinale, un deuxième exemple de réalisation d'un système de surveillance d'un dispositif de distribution d'eau conforme à l'invention, comprenant un clapet qui est représenté dans une position fermée.
- La figure 3 représente, selon une vue en perspective en coupe longitudinale, le deuxième exemple de réalisation de l'invention illustrée à la figure 2, dont le clapet est représenté dans une position ouverte.
- La figure 4 illustre, selon une vue en coupe longitudinale, un troisième exemple de réalisation de l'invention illustrée aux figures précédentes.
- La figure 5 représente, selon une vue en coupe longitudinale, un quatrième exemple, représenté en position fermée.
- La figure 6 représente, selon une vue en coupe longitudinale, le quatrième exemple de la figure 5 représenté en position ouverte.

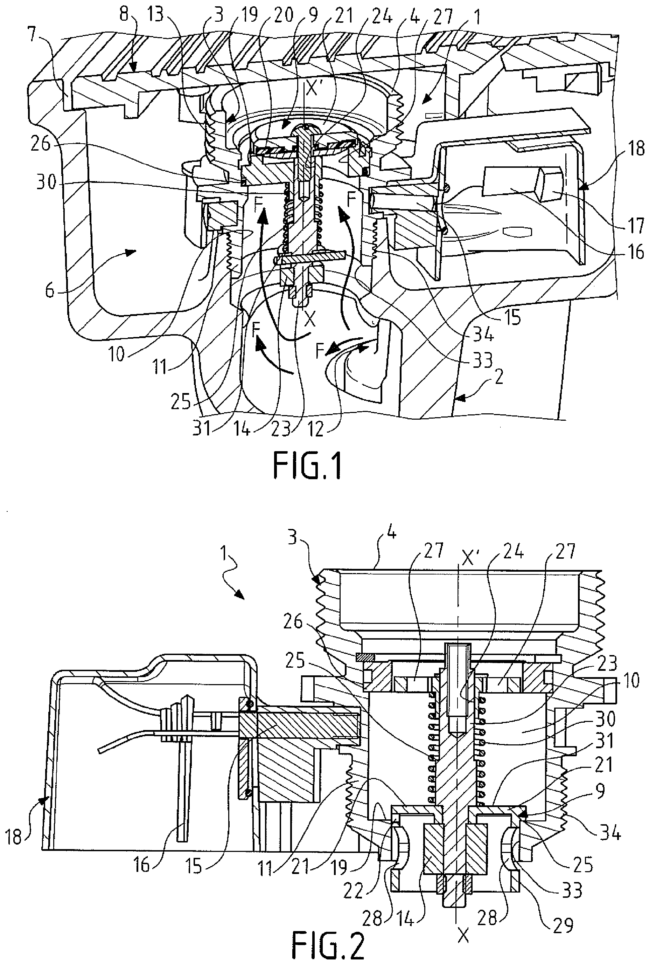

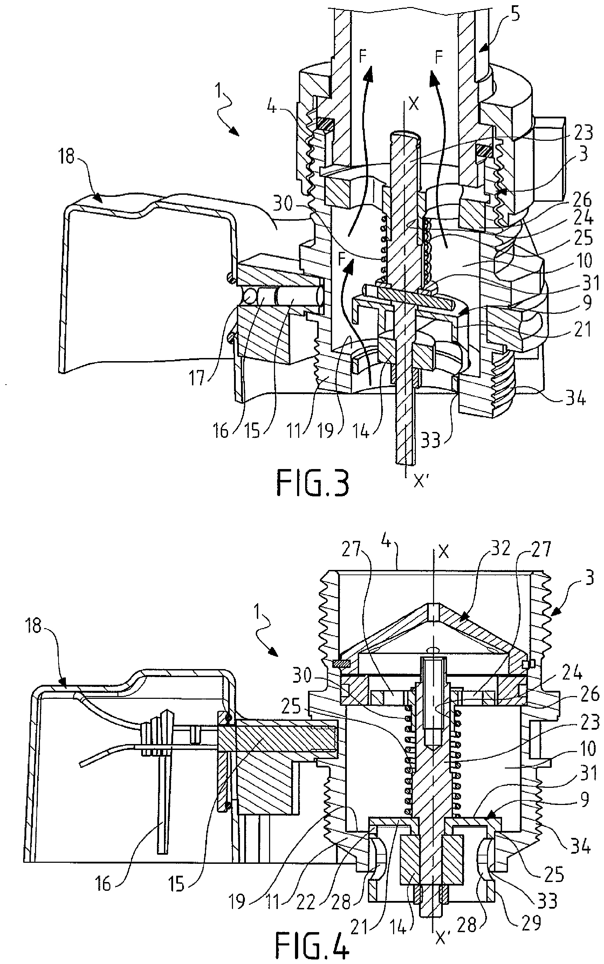

Les figures 1 à 3 représentent d'une part un premier exemple de réalisation d'un système de surveillance 1, et étant installé dans un dispositif de distribution 2 d'eau formé par une bouche de lavage (figure 1), et d'autre part un deuxième exemple de réalisation d'un système de surveillance 1 conforme à l'invention (figures 2 et 3).

L'invention concerne en l'espèce, en tant que tel, un système de surveillance 1 de la distribution d'eau d'un dispositif de distribution 2 d'eau du genre poteau ou bouche, de lavage, d'arrosage, ou d'incendie.

De façon préférentielle, le système de surveillance 1 de l'invention est préférentiellement conçu pour être monté sur un dispositif de distribution 2 préexistant de façon définitive ou amovible, alors que ledit dispositif de distribution 2 est par exemple déjà lui-même en place sur le terrain. Au contraire, le système de surveillance 1 peut également être directement intégré à un dispositif de distribution 2 neuf au cours par exemple de la fabrication de ce dernier.

Le système de surveillance 1 est préférentiellement conçu pour fonctionner à l'aide d'une alimentation électrique, et comprend de préférence une réserve d'énergie électrique 17 embarquée, par exemple une batterie, destinée à son alimentation propre, et ne nécessite de préférence pas d'être raccordé à un réseau de distribution d'électricité. Bien entendu, le système de surveillance 1 peut être conçu pour fonctionner à l'aide d'énergie fournie par exemple par un réseau électrique collectif.

Le dispositif de distribution 2 dont il est question dans le cadre de la présente invention est généralement destiné à être placé en extérieur, par exemple dans un espace public du genre voirie, et constitue un point d'eau utilisable par exemple par les pompiers comme dispositif de lutte contre les incendies, par les cantonniers comme point d'eau pour le nettoyage d'une chaussée, ou encore par les jardiniers pour l'arrosage et l'irrigation d'espaces verts. Bien entendu, le dispositif de distribution 2 d'eau pourra également être placé en intérieur sans sortir du cadre de l'invention. Le dispositif de distribution 2 d'eau, dans sa variante préférentielle représentée à la figure 1, forme avantageusement une bouche de lavage, d'arrosage ou d'incendie intégrable dans le sol.

Le système de surveillance 1 de l'invention permet de capter et relever des informations relatives à l'état, et/ou à l'utilisation, et/ou au fonctionnement du dispositif de distribution 2, de manière à ce qu'un utilisateur puisse surveiller ledit dispositif de distribution 2, et en particulier la mise en marche et l'arrêt de celui-ci, sa consommation d'eau, ou encore sa capacité à fonctionner correctement. Selon l'invention, le dispositif de distribution 2 comprend un conduit de sortie 3 par l'intermédiaire duquel de l'eau de distribution est destinée à être distribuée, le système de surveillance 1 étant préférentiellement conçu pour permettre de mesurer et déterminer la consommation d'eau de distribution émise à partir du dispositif de distribution par l'intermédiaire dudit conduit de sortie 3.

Le conduit de sortie 3 forme avantageusement un canal annulaire ou tubulaire au sein duquel l'eau de distribution est destinée à circuler sous la forme d'un flux d'eau de distribution, dont la section de passage est par exemple circulaire. Bien entendu, la section de passage peut également être par exemple elliptique, polygonale, ou autre. Le conduit de sortie 3 comporte préférentiellement un orifice de sortie 4, de manière à ce que l'eau de distribution s'échappe dudit conduit de sortie 3 par ledit orifice de sortie 4, ce dernier débouchant de préférence à l'extérieur du dispositif de distribution 2 d'eau. Le conduit de sortie 3 comporte également de préférence un orifice d'admission 33 par l'intermédiaire duquel l'eau de distribution en provenance d'une source d'eau 12 est introduite dans ledit conduit de sortie 3. C'est ainsi par l'intermédiaire du conduit de sortie 3 qu'est avantageusement destiné à passer au moins une partie, et avantageusement toute, l'eau de distribution distribuée par le dispositif de distribution 2. Le conduit de sortie 3 comprend de préférence une paroi interne 10 de forme générale tubulaire, voire sensiblement cylindrique, par exemple du genre tuyau, qui permet de guider l'eau de distribution depuis l'orifice d'admission 33 vers l'orifice de sortie 4 selon une direction de circulation F. L'eau de distribution provient par exemple d'une source d'eau 12 sous pression située à l'intérieur du dispositif de distribution 2, ladite source d'eau 12 sous pression étant avantageusement connectée au conduit de sortie 3. La paroi interne 10 relie ainsi préférentiellement l'orifice de sortie 4 à un moyen de raccordement 11 dudit conduit de sortie 3 à la source d'eau 12, ledit moyen de raccordement 11 formant l'orifice d'admission 33 d'eau dans ledit conduit de sortie 3. Le débit d'eau est ainsi préférentiellement fourni de manière à ce que l'eau de distribution circule depuis la source d'eau 12 jusqu'à l'orifice de sortie 4, par l'intermédiaire du conduit de sortie 3.

Le conduit de sortie 3 est préférentiellement intégré au dispositif de distribution 2, de sorte que ledit conduit de sortie3 appartient au dispositif de distribution 2, le système de surveillance 1 étant par exemple rapporté ou monté au sein de ce dernier, ou faisant partie intégrante de ce dernier. De façon alternative et avantageuse, le système de surveillance 1 forme un ensemble qui comprend le conduit de sortie 3. Dans ce cas préférentiel, le conduit de sortie 3 est avantageusement destiné à être rapporté et monté sur le dispositif de distribution 2, afin de pouvoir y être fixé à demeure, ou plus préférentiellement de façon démontable. Ainsi, le conduit de sortie 3 est de préférence formé par un raccord amovible comprenant un moyen de raccordement 11 au dispositif de distribution 2, par exemple par vissage de dudit raccord amovible sur ledit dispositif de distribution 2.

Le moyen de raccordement 11 comprend préférentiellement, tel qu'illustré aux figures, l'orifice d'admission 33 permettant de mettre en communication la source d'eau 12 avec le conduit de sortie 3 formant le raccord amovible. L'orifice d'admission est préférentiellement cylindrique. Le moyen de raccordement 11 comprend également de préférence un moyen de fixation amovible au dispositif de distribution 2 telle qu'une bague filetée 34, par exemple extérieure, ou intérieure, de sorte que le raccord amovible peut être vissé sur le dispositif de distribution 2. Bien entendu, il pourra être envisagé un moyen de raccordement 11 de type différent, par exemple formant des moyens de clipsage du conduit de sortie 3 à la source d'eau 12. Le moyen de raccordement 11 permet avantageusement de relier de façon sensiblement étanche le conduit de sortie 3 avec la source d'eau 12. A cet effet, un joint d'étanchéité est de préférence prévu sur l'orifice de connexion de la source d'eau 12, de sorte qu'il est optionnel de prévoir un joint d'étanchéité sur le conduit de sortie 3. Il est également possible de prévoir par exemple une étanchéité sans joint du moyen de raccordement 11.

Ainsi, selon une telle configuration, le système de surveillance 1 est particulièrement polyvalent, facile à mettre en oeuvre, et peut être adapté aux structures existantes sans nécessiter le démontage de ces dernières. En particulier, le système de surveillance 1 est conçu pour pouvoir être monté par simple vissage du raccord amovible sur la sortie d'un dispositif de distribution 2 existant, par exemple directement sur le terrain. En d'autres termes, le système de surveillance 1 est amovible, puisque le conduit de sortie 3 sur lequel le système de clapet 9, le moyen de détection 14, 15 et le moyen de surveillance 16 peuvent être facilement montés, ou démontés, du dispositif de distribution 2 d'eau.

De préférence, de manière générale, le système de surveillance 1 est prévu pour être placé à proximité d'une sortie de distribution du dispositif de distribution 2, laquelle est formée en l'espèce par l'orifice de sortie 4. De cette façon, le système de surveillance 1 peut avantageusement détecter sensiblement tout débit d'eau de distribution au travers dudit orifice de sortie 4. En particulier dans le cas où le dispositif de distribution 2 forme une bouche, le système de surveillance 1 et le conduit de sortie 3 sont placés au-dessus de la source d'eau 12 (tel qu'illustré à la figure 1), de manière à surplomber cette dernière et à être alimentés par le bas. Toutefois, rien ne s'oppose à ce que le système de surveillance 1 soit placé ailleurs au sein du dispositif de distribution 2.

De façon préférentielle, l'orifice de sortie 4 est pourvu d'un moyen de connexion 13 dudit conduit de sortie 3 avec un embout 5, du genre tuyau, lance, ou pistolet, le moyen de connexion 13 étant par exemple formé par des moyens de vissage de ce dernier avec ledit embout 5 (tel qu'illustré par exemple à la figure 3). Un utilisateur peut ainsi diriger le flux d'eau de distribution émise par l'intermédiaire du conduit de sortie 3 à l'aide de l'embout 5, afin par exemple d'arroser un jardin nettoyer une chaussée ou éteindre un incendie. Les moyens de connexion 13 sont par exemple formés par une bague filetée extérieure (tel qu'illustré aux figures), ou intérieure, ou une bague de clipsage ou autre. Les moyens de connexion 13 permettent avantageusement de relier de façon sensiblement étanche l'embout 5 avec le conduit de sortie 3. A cet effet, un joint d'étanchéité est de préférence prévu sur ledit embout 5, de sorte qu'il est optionnel de prévoir un joint d'étanchéité sur le conduit de sortie 3.

Par ailleurs, le dispositif de distribution 2 comprend préférentiellement un moyen de commande de la source d'eau 12 sous pression de manière à commander à celle dernière de fournir ou non de l'eau sous pression au conduit de sortie 3, et ainsi commander la distribution d'eau du dispositif de distribution 2. Le moyen de commande est avantageusement formé par une commande mécanique du genre robinet ou vanne, qui est par exemple accessible depuis l'intérieur de la chambre supérieure 6 (non illustré aux figures).

Dans le cas préférentiel où le dispositif de distribution 2 est une bouche, tel qu'illustré à la figure 1, le dispositif de distribution 2 comprend avantageusement une chambre supérieure 6 au sein de laquelle le conduit de sortie 3 débouche, ladite chambre supérieure 6 étant dotée d'une ouverture d'accès supérieure 7 pourvue d'un moyen de fermeture 8 du genre plaque métallique ou grille métallique. La chambre supérieure 6 est alors préférentiellement ménagée dans l'épaisseur d'une surface, de préférence horizontale, par exemple le sol, de manière à ce que l'ouverture d'accès supérieur 7 et le moyen de fermeture 8 affleurent de ladite surface. Le conduit de sortie 3 est ainsi avantageusement placé en dessous du niveau de ladite surface, et peut être avantageusement dissimulée et protégée par le moyen de fermeture 8, qui forme une partie amovible de ladite surface du genre trappe d'accès, ou plaque de fermeture. Le dispositif de distribution 2 est donc avantageusement enterré dans le sol, l'ouverture d'accès supérieure 7 permettant l'accès au conduit de sortie 3, et en particulier à l'orifice de sortie 4, par un utilisateur placé au-dessus dudit sol.

Sans sortir du cadre de l'invention, le dispositif de distribution 2 pourra préférentiellement au contraire faire saillie du sol, pour former par exemple une fontaine, ou encore un poteau d'incendie (non représenté), c'est-à-dire un hydrant permettant l'alimentation en eau de dispositifs de lutte contre les incendies.

Le système de surveillance1 comprend un système de clapet 9, 9a, 9b conçu pour être monté au sein du conduit de sortie 3 et étant conçu pour se déplacer entre :
- une position ouverte sous l'action d'un débit d'eau de distribution dans le conduit de sortie 3, lorsque ledit débit d'eau est supérieur à un seuil de débit prédéterminé, et
- une position fermée lorsque le débit d'eau est inférieur audit seuil de débit, ledit système de clapet 9, 9a, 9b étant conçu pour obstruer partiellement le conduit de sortie 3 en position fermée.

Le système de clapet 9, 9a, 9b forme avantageusement un dispositif mécanique déplaçable, rabattable, ou dont la forme peut varier, de manière à évoluer entre deux positions distinctes, l'une étant la position fermée dans laquelle le conduit de sortie 3 est occlus par ledit système de clapet 9, 9a, 9b selon un certain degré, et l'autre étant la position ouverte dans laquelle le conduit de sortie 3 est occlus par ledit système de clapet 9, 9a, 9b selon un degré inférieur au degré d'occlusion de la position fermée, de sorte que le clapet en position fermée s'oppose davantage au passage de l'eau au sein du conduit de sortie 3 qu'en position ouverte.

Le système de clapet 9, 9a, 9b est par conséquent formé par un dispositif mécanique qui permet de s'opposer au passage d'un liquide dans un conduit, de manière à limiter ou à bloquer le passage dudit liquide dans ledit conduit, et le liquide étant dans le cas de l'invention formé par l'eau de distribution, et le conduit par le conduit de sortie 3.

Le système de clapet 9, 9a, 9b est monté dans la section de passage de l'eau de distribution, de manière à pouvoir être mu sous l'action d'un flux de ladite eau de distribution du conduit de sortie 3 dirigé vers l'orifice de sortie 4. Le système de clapet 9, 9a, 9b résiste ainsi avantageusement au passage de l'eau de distribution, de manière à pouvoir être entraîné vers sa position ouverte par le débit d'eau, et maintenu dans cette position ouverte si ledit débit d'eau est suffisant, et excède le seuil prédéterminé. De préférence, le système de clapet 9, 9a, 9b revient de lui-même en position fermée lorsque le débit d'eau est insuffisant, et en l'espèce inférieur au seuil de débit.

Le système de clapet 9, 9a, 9b est conçu pour permettre à l'eau de distribution, lorsque ledit système de clapet 9, 9a, 9b est en position fermée, de pousser ledit système de clapet 9, 9a, 9b vers sa position ouverte, dans le cas où la pression (par exemple la pression statique) de l'eau de distribution atteint une valeur suffisante, de préférence supérieure à un seuil de pression prédéterminé. Avantageusement, le système de clapet 9, 9a, 9b adopte sa position fermée en l'absence de débit d'eau de distribution, ou lorsque celui-ci est suffisamment faible, et de préférence lorsque la pression d'eau de distribution pour pousser le système de clapet 9, 9a, 9b est inférieure audit seuil de pression prédéterminé.

Le système de clapet 9, 9a, 9b est avantageusement conçu pour pouvoir être mu entre deux positions de butée formées d'une part par la position ouverte et d'autre part par la position fermée, de manière à définir une course de déplacement entre ces deux positions. Le système de clapet 9, 9a, 9b présente ainsi préférentiellement des positions intermédiaires entre les positions ouverte et fermée, par exemple une position semi-ouverte, par exemple lorsque débit d'eau dépasse le seuil de débit prédéterminé en restant au voisinage de ce dernier. Dans ce cas la position semi-ouverte est préférentiellement assimilée à la position ouverte de l'invention.

Selon l'invention, le système de surveillance 1 comprend également un moyen de détection 14, 15 apte à détecter au moins l'une des deux positions ouverte ou fermée du système de clapet 9, 9a, 9b afin de fournir une information de position détectée. Le moyen de détection 14, 15 de l'invention, constituant en d'autres termes un capteur, est conçu pour détecter ainsi préférentiellement :
- soit le fait que le système de clapet 9, 9a, 9b est en position ouverte,
- soit le fait que le système de clapet 9, 9a, 9b est en position fermée,
- soit les deux positions ouverte et fermée du système de clapet.

La position du système de clapet 9, 9a, 9b témoignant du caractère supérieur ou inférieur au seuil de débit du débit d'eau de distribution dans le conduit de sortie 3, le moyen de détection 14, 15 de la position dudit système de clapet 9, 9a, 9b permet de traduire de façon simple et fiable la présence ou l'absence d'une distribution d'eau par l'intermédiaire du conduit de sortie 3 du dispositif de distribution 2 d'eau. Le moyen de détection 14, 15 forme ainsi un capteur de mouvement ou de position du système de clapet 9, 9a, 9b, de sorte qu'il peut être conçu pour être particulièrement robuste, et par exemple plus robuste qu'un capteur de pression pour détecter directement la présence d'eau dans le conduit de sortie 3, beaucoup plus fragile et moins fiable. De ce fait, le système de surveillance 1 nécessite peu de maintenance, le moyen de détection 14, 15 ne nécessitant pas par exemple d'être nettoyé ou changé.

Le moyen de détection 14, 15 est conçu pour transformer un état mécanique du système de clapet 9, 9a, 9b, en l'espèce sa position ouverte ou fermée, en une information de position détectée, c'est-à-dire un signal lisible par un système tiers, l'information de position détectée étant par exemple codée par un signal électrique.

Par ailleurs, l'invention permet de profiter avantageusement de la présence du système de clapet 9, 9a, 9b pour réaliser le système de surveillance 1 de l'invention, le clapet 9, 9a, 9b étant par ailleurs préférentiellement utile, voire indispensable, pour le bon fonctionnement du dispositif de distribution 2. En effet, le système de clapet 9, 9a, 9b peut présenter une double fonction, outre celle d'être utile au système de surveillance 1, de fermeture automatique du conduit de sortie3 en l'absence de débit d'eau de distribution, ce qui permet avantageusement de protéger le dispositif de distribution 2. En effet, tel qu'illustré aux figures 1 et 2, le système de clapet9 est préférentiellement un clapet anti-retour conçu pour autoriser le passage de l'eau de distribution en direction de l'extérieur du dispositif de distribution2 en adoptant la position ouverte, et pour interdire sensiblement le passage d'eau en sens inverse en adoptant la position fermée. Le clapet anti-retour protège et isole ainsi sensiblement la source d'eau 12 de tout ou partie des pollutions ou de l'eau provenant de l'extérieur, lesquelles ne peuvent sensiblement pas pénétrer au sein du conduit de sortie 3 lorsque ledit clapet est en position fermée. Dans ce cas préférentiel, le système de clapet 9 est avantageusement conçu pour obstruer totalement le conduit de sortie 3 en position fermée, de façon étanche.

De façon préférentielle, le moyen de détection 14, 15 peut être placé de manière à ne pas être en contact, au moins en partie, avec l'eau de distribution. Le moyen de détection 14, 15 est en effet avantageusement conçu pour détecter à distance la position du système de clapet 9. Dans ce cas préférentiel, tout ou partie du moyen de détection 14, 15 est placé à l'extérieur du conduit de sortie 3, par exemple à la périphérie de ce dernier, de manière à être isolé de l'écoulement d'eau de distribution, potentiellement nocif au bon fonctionnement du moyen de détection 14, 15, notamment dans le cas où celui-ci met en œuvre ou reçoit un courant électrique.

Par exemple, le moyen de détection 14, 15 comprend d'une part un élément témoin 14 solidaire du système de clapet 9, et d'autre part un élément de référence 15 fixe, par exemple solidaire du conduit de sortie 3, et conçu pour interagir avec l'élément témoin 14, de sorte que ledit moyen de détection 14, 15 puisse évoluer entre un premier état E0 lorsque le système de clapet 9 est en position fermée et un deuxième état E1 lorsque le système de clapet 9 est en position ouverte. L'élément témoin 14 forme préférentiellement une partie mobile du moyen de détection 14, 15, et est conçu pour se déplacer en même temps que le système de clapet 9. L'élément témoin 14 est avantageusement conçu pour interagir à distance avec l'élément de référence 15, de sorte que le déplacement relatif de l'élément témoin 14 par rapport à l'élément de référence 15 traduise la position ouverte ou fermée du système de clapet 9, et entraîne le passage du moyen de détection 14, 15 de l'état E0 à l'état E1 ou *vice versa.* On entend avantageusement par « *interagir à distance* » une interaction sans fil, et sans lien mécanique, de l'élément témoin 14 avec l'élément de référence 15. Cette interaction est de préférence magnétique, tel que décrit ci-après.

De préférence, l'élément de référence 15 est disposé à la périphérie du conduit de sortie 3, de manière à être isolé de l'eau de distribution par la paroi interne 10 dudit conduit de sortie 3. L'élément témoin 14 étant solidaire du système de clapet 9, il baigne avantageusement quant à lui dans l'eau de distribution au sein du conduit de sortie 3. Il est également possible d'envisager que l'élément témoin 14 soit entouré d'une coque étanche l'isolant du contact de l'eau de distribution (non représenté). Le moyen de détection 14, 15 peut ainsi avantageusement être formé par une partie passive plongée dans l'eau de distribution, en l'espèce l'élément témoin 14, et une partie active isolée de l'eau de distribution, en l'espèce l'élément de référence 15. La partie passive étant préférentiellement par nature plus robuste à la présence d'eau, la partie active du moyen de détection 14, 15 peut être avantageusement isolée de ladite eau de distribution de sorte que ledit moyen de détection 14, 15 est particulièrement fiable, robuste, et nécessite peu d'entretien. Néanmoins, il est possible d'envisager la situation inverse dans laquelle l'élément témoin 14 est actif, et l'élément de référence 15 est passif. L'élément témoin 14 est de préférence monté de façon souple ou glissante, entre deux butées, sur le clapet9.

De préférence, l'état E0 correspond à la position fermée du système de clapet 9, et donc à une absence sensible (ou une faible présence) d'émission d'eau de distribution par le dispositif de distribution 2 par l'intermédiaire du conduit de sortie 3. Avantageusement l'état E1 correspond à la position ouverte du système de clapet 9, et donc à la présence d'une émission d'eau de distribution par le dispositif de distribution 2.

De manière avantageuse, tel qu'illustré aux figures, l'élément témoin 14 est préférentiellement formé par un aimant 14 présentant un champ magnétique, par exemple un aimant permanent ne nécessitant pas d'être alimenté en énergie électrique pour fonctionner.

L'élément de référence15 est quant à lui avantageusement formé par un interrupteur magnétique 15, du genre interrupteur à lame souple, de manière à pouvoir être commandé à distance par le mouvement de l'aimant14, en particulier de son champ magnétique, ou par la distance relative entre l'aimant 14 et ledit interrupteur magnétique 15.

L'interrupteur magnétique 15 est par exemple conçu pour évoluer entre :
- l'un des états E0 ou E1 lorsque la distance entre l'aimant 14 et l'interrupteur magnétique 15 est inférieure à une distance d'activation prédéterminée, et
- l'autre des états E0 ou E1 lorsque la distance entre l'aimant 14 et l'interrupteur magnétique 15 est supérieure à ladite distance d'activation.

Dans la configuration préférentielle illustrée aux figures, l'interrupteur magnétique 15 et l'aimant 14 sont disposés de manière à ce que :
- l'aimant 14 soit éloigné de l'interrupteur magnétique 15, au-delà de la distance d'activation, lorsque le système de clapet 9 est en position fermée, de sorte que ledit interrupteur magnétique 15 adopte par exemple un état ouvert, correspondant à l'état E0, et
- l'aimant 14 soit proche de l'interrupteur magnétique 15, en deçà de la distance d'activation, lorsque le système de clapet 9 est en position ouverte, de sorte que ledit interrupteur magnétique 15 adopte par exemple un état fermé, correspondant à l'état E1.

Ainsi, à l'aide d'un simple système d'aimant 14 et d'interrupteur magnétique 15 associé à un système de clapet 9, le système de surveillance 1 permet de détecter la distribution d'eau par le dispositif de distribution 2. Le coût de conception et de fabrication d'un tel système de surveillance 1 est, en conséquence, particulièrement faible, tandis que la longévité et la robustesse du dispositif de distribution d'eau et du système de surveillance 1 est particulièrement élevée. L'état E0 correspondant à une position ouverte de l'interrupteur magnétique 15, le moyen de détection 14, 15 et le système de surveillance 1 présente une consommation énergétique particulièrement faible, de sorte qu'une simple alimentation par une réserve d'énergie de type batterie peut être mise en œuvre, sans nécessiter un raccordement au réseau électrique. En effet, la plupart du temps, le système de clapet 9 est avantageusement en position fermée, dans la mesure où il ne passe en position ouverte que si de l'eau de distribution est effectivement consommée et mise en circulation.

Bien entendu, la configuration inverse peut être envisagée sans sortir du cadre de l'invention, dans laquelle l'élément témoin 14 forme un interrupteur magnétique, et l'élément de référence 15 forme un aimant.

Selon l'invention, le système de surveillance 1 comprend un moyen de surveillance 16 de la distribution d'eau conçu pour, sur la base de l'information de position détectée par le moyen de détection 14, 15, générer un message représentatif de la distribution d'eau par ledit dispositif de distribution 2. Le moyen de surveillance 16 est ainsi préférentiellement conçu pour mettre à disposition d'un utilisateur une information relative à la distribution d'eau, et en particulier à la consommation d'eau de distribution, du dispositif de distribution 2. L'utilisateur peut ainsi avantageusement surveiller l'état de fonctionnement, et/ou l'utilisation normale ou abusive, du dispositif de distribution 2 par l'intermédiaire du moyen de surveillance 16. Tel qu'illustré aux figures, ce dernier est préférentiellement formé, au moins en partie, par des moyens électroniques, du genre carte électronique. Le moyen de détection 14, 15 transmet de préférence l'information de position au moyen de surveillance 16 par le biais d'un signal électrique. Par exemple, l'interrupteur magnétique 15, lorsqu'il est dans l'état E1, permet de fermer un circuit électrique du moyen de surveillance 16, ce qui consomme de l'énergie électrique fournie par exemple par la réserve d'énergie électrique 17. De préférence, dans l'état E0, ledit interrupteur magnétique 15 laisse ledit circuit électrique ouvert, afin d'économiser l'énergie électrique, laquelle est par exemple fournie par la réserve d'énergie électrique 17. Néanmoins, notamment dans le cas d'un moyen de détection 14, 15 à fonctionnement mécanique, l'information de position peut être transmise au moyen de surveillance 16 de façon différente, par exemple purement mécanique, ou électromécanique.

Selon l'invention, par l'intermédiaire du moyen de surveillance 16, l'utilisateur peut accéder à une telle information, relative à la distribution d'eau, par lecture et/ou interprétation du message que ledit moyen de surveillance 16 est conçu pour générer. Le message est généré à l'aide de l'information de position ouverte ou fermée du système de clapet 9, cette position traduisant la présence ou l'absence d'un flux d'eau de distribution au sein du conduit de sortie 3. Par exemple, le message généré par le moyen de surveillance 16 et destiné à l'utilisateur, traduit :
- la position ouverte ou fermée du système de clapet 9, traduisant ainsi en direct la présence ou l'absence d'une émission d'eau de distribution à partir du dispositif de distribution 2, et/ou,
- un horodatage des changements de position du système de clapet 9, et/ou
- une durée pendant laquelle le système de clapet 9 a été en position ouverte (ou en position fermée) et/ou,
- une estimation de la consommation d'eau de distribution, exprimée par exemple en unité de volume, et calculée à l'aide du temps pendant lequel le système de clapet 9 a été en position ouverte et une valeur débit moyen d'eau émis par la source d'eau lorsque le clapet est en position ouverte.

Selon l'invention, le moyen de surveillance 16 comprend un moyen de mesure du temps pendant lequel le système de clapet 9 est en position ouverte, permettant préférentiellement d'effectuer par exemple le calcul de l'estimation de la consommation d'eau de distribution. Par exemple, le calcul de l'estimation de la consommation d'eau peut être effectué par le moyen de surveillance 16 en multipliant le temps pendant lequel le système de clapet 9 est en position ouverte par ladite valeur de débit moyen d'eau.

L'invention combine ainsi de manière particulièrement avantageuse un système à clapet 9 avec un moyen de surveillance 16 comprenant un moyen de mesure du temps, ce qui permet d'obtenir un système de surveillance 1 particulièrement fiable, simple et bon marché, lequel système de surveillance 1 permet d'obtenir une bonne information de la consommation d'eau du dispositif de distribution.

Par exemple, le moyen de surveillance 16 comprend un afficheur local du message (non représenté), du genre cadran ou écran, disposé de façon visible au niveau du dispositif de distribution 2, par exemple dans la chambre supérieure 6, ou sur une face du moyen de fermeture 8 tournée en direction de l'extérieur de ladite chambre supérieure 6.

Alternativement, le moyen de surveillance 16 comprend des moyens de transmission à distance, par exemple par signal électromagnétique, du message représentatif de la distribution d'eau. Les moyens de transmission à distance peuvent ainsi par exemple transmettre le message de façon locale à l'utilisateur. Dans ce cas, l'utilisateur peut par exemple être muni d'un terminal de réception apte à recevoir le message émis par les moyens de transmission, soit sans fil par ondes électromagnétiques, soit à l'aide d'une connexion câblée, l'utilisateur connectant un câble de transmission du terminal au moyen de transmission à distance. De façon plus préférentielle, les moyens de transmission sont conçus pour transmettre le message à l'aide d'un signal électromagnétique à longue portée, par exemple à plus d'un kilomètre, de sorte par exemple qu'un réseau de réception puisse recevoir ledit message et le mettre à disposition de l'utilisateur, par exemple sur un serveur en réseau accessible par Internet.

Le serveur en réseau ou le terminal peuvent optionnellement effectuer des calculs afin de modifier le message présenté à l'utilisateur. Par exemple, le moyen de surveillance 16 peut être conçu pour simplement envoyer une information de passage de l'état E0 à l'état E1 du moyen de détection 14, 15 et inversement. Dans ce cas préférentiel, le serveur et/ou le terminal distant se chargent avantageusement de chronométrer le temps pendant lequel ledit moyen de détection 14, 15 est dans un état donné afin par exemple de déterminer une estimation de la consommation d'eau du dispositif de distribution 2, et présenter une telle estimation à un utilisateur. Alternativement, le moyen de surveillance 16 peut préférentiellement se charger du chronométrage du temps pendant lequel le moyen de détection 14, 15 est dans un état donné, et envoyer ensuite le temps chronométré au serveur et/ou au terminal distant.

De préférence, les moyens de transmission à distance sont conçus pour émettre un message sous forme d'un signal électromagnétique à chaque changement d'état du moyen de détection 14, 15, (par exemple de l'état E0 à l'état E1 et/ou de l'état E1 à l'état E0) témoignant de ce changement d'état. De cette manière, le message à transmettre peut être relativement succinct, de façon à pouvoir être envoyé sur une longue portée sans pour autant que le système de surveillance 1 consomme une énergie électrique trop importante, de manière à permettre une grande longévité de la réserve d'énergie électrique 17.

De préférence, le système de surveillance 1 comprend un boîtier 18 solidaire du conduit de sortie 3 et contenant le moyen de surveillance 16, et contenant avantageusement également l'élément de référence 15. La réserve d'énergie électrique 17 peut également préférentiellement être contenue dans le boîtier 18. Ce dernier est lui-même de préférence solidaire du conduit de sortie 3, notamment lorsque ce dernier forme un raccord, de manière par exemple à pouvoir être contenu dans la chambre supérieure 6.

Le boîtier 18 forme de manière avantageuse une coque protectrice, optionnellement rigide, et en particulier étanche, pour les éléments qu'il contient (par exemple le moyen de surveillance 16, la réserve d'énergie électrique 17 et l'élément de référence 15), qui sont susceptibles de comporter des parties électriques sensibles à l'humidité, aux intempéries et aux chocs.

De préférence, tel qu'illustré aux figures, le système de clapet 9 est conçu pour coulisser au sein, et le long, du conduit de sortie 3 :
- dans le sens du débit d'eau, en direction de la sortie, et par exemple de l'orifice de sortie 4, pour atteindre la position ouverte, sous l'action dudit débit d'eau, lorsque ce dernier est supérieur au seuil de débit, et
- dans un sens opposé au sens du débit d'eau pour atteindre la position fermée.

Dans ce cas préférentiel, le système de clapet 9 est par exemple monté à coulissement ou en translation au sein du conduit de sortie 3 le long d'un axe de coulissement X-X', et par l'intermédiaire de moyens de coulissement solidaires du conduit de sortie 3, et en particulier sa paroi interne 10. De préférence, l'axe de coulissement X-X' est coaxial avec le flux d'eau de distribution, de manière à ce que le débit d'eau entraîne avec facilité le système de clapet 9 vers sa position ouverte tout en circulant en direction de l'orifice de sortie 4. De préférence, et notamment dans le cas où le dispositif de distribution 2 forme une bouche tel qu'illustré à la figure 1, le conduit de sortie 3 s'étend de façon sensiblement verticale par rapport au sol, le système de clapet 9 étant conçu pour se déplacer de façon sensiblement verticale le long du conduit de sortie 3, la position ouverte correspondant à une position haute du système de clapet 9, et la position fermée à une position basse de ce dernier. Dans ce cas, l'axe de coulissement X-X' est par exemple sensiblement vertical par rapport au sol.

Le conduit de sortie 3, optionnellement formé par le raccord précédemment évoqué, est préférentiellement pourvu d'un col annulaire 19 interne, le système de clapet 9 comprenant un organe de fermeture 21, par exemple de forme sensiblement discoïde, conçu pour :
- en position fermée du système de clapet 9, entrer en contact à sa périphérie avec ledit col annulaire 19 de façon à obstruer au moins partiellement le conduit de sortie 3, avec ledit col annulaire 19, et
- en position ouverte du système de clapet 9, être positionné à l'écart dudit col annulaire 19 de manière à ouvrir un passage de circulation 22 entre ledit col annulaire 19 et ledit organe de fermeture 21.

L'organe de fermeture 21 forme ainsi de préférence un élément mobile du système de clapet 9, et forme en lui-même un clapet, entre une position ouverte dans laquelle il est éloigné du col annulaire 19, et une position fermée dans laquelle il est approché dudit col annulaire 19, par exemple de manière à être en contact avec ledit col annulaire 19. Le col annulaire 19 forme préférentiellement une réduction de diamètre de la paroi interne 10, s'étendant sur toute la circonférence ou le périmètre interne du conduit de sortie 3 et contre lequel l'organe de fermeture 21 est destiné à entrer en contact, ou avec lequel l'organe de fermeture 21 est destiné à coopérer, pour obstruer le conduit de sortie 3.

Le système de clapet 9 est optionnellement conçu pour que ladite obstruction soit sensiblement étanche, et comprend pour cela par exemple un joint d'étanchéité 20 monté sur le col annulaire 19 ou sur l'organe de fermeture 21 (tel qu'illustré à la figure 1). Au contraire, le système de clapet 9 est conçu pour que ladite obstruction ne soit pas étanche, et soit légèrement permissive, par exemple de façon à tolérer l'écoulement d'eau tout en limitant sensiblement le passage d'impuretés, de pollutions ou de poussières depuis l'extérieur jusque dans le conduit de sortie 3. Dans ce cas, l'organe de fermeture 21 est par exemple conçu pour n'entrer en contact que partiellement avec le col annulaire 19, de manière à toujours ménager un passage de circulation 22 pour l'eau de distribution, qu'il soit en position ouverte ou fermée (tel qu'illustré aux figures 2 et 3). Bien entendu, dans ce cas, le passage de circulation 22 est par exemple plus étroit en position fermée qu'en position ouverte.

Tel qu'illustré par exemple aux figures 1 à 3, le système de clapet 9 comprend préférentiellement une tige de coulissement 23 solidaire de l'organe de fermeture 21, et par l'intermédiaire de laquelle ledit organe de fermeture 21 est destiné à coulisser le long du conduit de sortie 3, ce dernier étant pourvu d'un guide de tige 24 sur lequel ladite tige de coulissement 23 est montée à coulissement.

Le guide de tige 24 et la tige de coulissement 23 forment de préférence tout ou partie des moyens de coulissement du système de clapet 9 au conduit de sortie 3, afin de former par exemple une liaison glissante, optionnellement pivotante, le long de l'axe de coulissement X-X'. Tel qu'illustré aux figures, la tige de coulissement 23 est préférentiellement de forme générale cylindrique, coaxiale à l'axe de coulissement X-X', et comporte avantageusement une ou plusieurs butées de fin de course 25, permettant de limiter la course du système de clapet 9 aux positons ouverte et fermée. L'organe de fermeture 21 peut optionnellement former en lui-même l'une des butées de fin de course 25 comme illustré à la figure 1, en venant par exemple en butée contre le col annulaire 19, ou contre le guide de tige 24. De préférence, l'élément témoin 14 est solidaire de la tige de coulissement 23, au voisinage d'une extrémité de cette dernière. Par exemple, tel qu'illustré aux figures, l'élément témoin 14 est de forme annulaire de manière à pouvoir être enfilé sur la tige de coulissement 23, par exemple au voisinage de son extrémité inférieure, et maintenu sur celle-ci par exemple à l'aide d'un écrou, d'une rondelle élastique ou d'une goupille. L'élément témoin 14 pourra bien entendu également être monté solidaire d'un autre élément du système de clapet 9, par exemple l'organe de fermeture 21.

Le guide de tige24, tel qu'illustré aux figures, est avantageusement de forme générale discoïde, de manière à pouvoir être monté en appui contre la paroi interne 10, en particulier contre un anneau intérieur 26 du conduit de sortie 3. Le guide de tige 24 est préférentiellement pourvu d'un orifice de coulissage conçu pour permettre le coulissement de la tige de coulissement 23 en son sein, et par exemple coaxial avec l'axe de coulissement X-X'. Le guide de tige 24 est en outre pourvu d'orifices traversants 27 permettant le libre passage du flux d'eau de distribution au travers du conduit de sortie 3.

Dans le cas préférentiel où l'axe de coulissement X-X' est vertical, l'organe de fermeture 21 peut par exemple être placé :
- au dessus du guide de tige 24, tel qu'illustré par exemple à la figure 1, ou
- au dessous du guide de tige 24, tel qu'illustré par exemple aux figures 2 et 3.

De manière avantageuse, afin d'améliorer le guidage en coulissement du système de clapet 9, notamment dans le cas de l'exemple de réalisation préférentiel illustré aux figures 2 et 3, ledit système de clapet 9 comprend de préférence une jupe de coulissement 29 s'élevant à partir de l'organe de fermeture 21 et étant conformée pour coulisser au sein du col annulaire 19, afin que le système de clapet 9 puisse coulisser au sein du conduit de sortie 3 par l'intermédiaire de ladite jupe de coulissement 29, cette dernière étant percée d'au moins une ouverture de passage 28, optionnellement plusieurs réparties sur la circonférence de la jupe de coulissement 29, formant le passage de circulation 22 lorsque le système de clapet 9 est en position ouverte. La jupe de coulissement 29 est avantageusement de forme générale cylindrique, en particulier sa surface périphérique, et est par exemple coaxiale avec l'axe de coulissement X-X' de manière à pouvoir coulisser le long de ce dernier en étant guidée par le col annulaire 19. Les ouvertures de passage 28 restent optionnellement légèrement ouvertes lorsque l'organe de fermeture 21 est en position fermée, tel qu'illustré à la figure 3, et sont pour cela avantageusement partiellement occultées par le col annulaire 19. Au contraire, elles peuvent être totalement occultées, pour le moins au voisinage de l'organe de fermeture 21, par le col annulaire 19, de manière à fermer totalement le passage de circulation 22 en position fermée.

De préférence, l'ouverture de passage 28 de la jupe de coulissement 29 est disposée à distance de l'organe de fermeture 21, afin qu'une première portion de la course du système de clapet 9 le long de l'axe de coulissement X-X' corresponde à la position fermée du clapet 9, et qu'une deuxième portion de la course du système de clapet 9 corresponde à la position ouverte dudit système de clapet 9.

Tel qu'illustré aux figures, ladite jupe de coulissement 29 est préférentiellement disposée en amont de l'organe de fermeture 21 dans le sens de circulation F.

De préférence, l'élément témoin 14 est monté de manière fixe par rapport à ladite tige de coulissement 23. Il peut toutefois, à titre d'alternative, être monté de manière à pouvoir coulisser librement le long de l'axe de coulissement X-X' de la tige de coulissement 23, entre deux bornes fixes par rapport à ladite tige de coulissement 23. L'élément témoin 14 est ainsi avantageusement monté selon un montage dit « *fou* », afin de pouvoir circuler le long de la tige de coulissement 23 sous l'action éventuelle de l'eau de distribution, même lorsque le système de clapet 9 est en position fermée. Un tel montage de l'élément témoin 14 est avantageux dans la mesure où il permet au système de détection 1 d'effectuer une détection de circulation d'eau avant même que cette dernière ait pu faire basculer le système de clapet 9 dans sa position ouverte.

De préférence, le système de clapet 9 comprend un flotteur (non illustré) conçu pour flotter sur l'eau de distribution de manière à ce que ce dernier contribue à faire passer, ou à maintenir, ledit système de clapet 9 en position ouverte, c'est-à-dire préférentiellement en position haute, en présence d'eau de distribution sous ledit système de clapet 9. Le système de clapet 9, est ainsi avantageusement entraîné vers sa position ouverte à la fois sous l'action du flux d'eau de distribution, et à la fois par flottaison sur ladite eau de distribution.

Le système de clapet 9 pourra également comprendre un organe de rappel 30, par exemple un ressort de rappel, dudit système de clapet 9 vers sa position fermée lorsque ledit système de clapet 9 est en position ouverte. Tel qu'illustré aux figures, l'organe de rappel 30 forme avantageusement un ressort axial de compression qui est enfilé sur la tige de coulissement 27, par exemple en butée à une première extrémité contre le guide de tige 24, et à une autre extrémité contre un arrêt de rappel 31 solidaire de la tige de coulissement 23, de manière à pouvoir être compressé entre ledit guide de tige 24 et ledit arrêt de rappel 31. L'arrêt de rappel 31 peut être formé par exemple par une goupille, une rondelle, un écrou, ou l'organe de fermeture 21 lui-même (notamment dans le cas de la variante des figures 2 et 3).

Tel qu'illustré aux figures, ledit organe de rappel 30 est préférentiellement disposé en amont de l'organe de fermeture 21 dans le sens de circulation F. La figure 4 représente un troisième exemple de réalisation de l'invention, qui est sensiblement conforme au deuxième exemple de réalisation représenté aux figures 2 et 3, à ceci près qu'il comprend en outre avantageusement un dispositif anti-intrusion 32, qui présente une forme générale de cône dont l'axe est coaxial avec l'axe de coulissement X-X'. Le dispositif anti-intrusion 32 est préférentiellement disposé dans le conduit de sortie 3, au voisinage de l'orifice de sortie 4, préférentiellement de façon à protéger le système de clapet 9 de l'extérieur de l'orifice de sortie 3 tout en autorisant le passage de l'eau de distribution au travers du conduit de sortie 3. Une telle disposition permet notamment de limiter les actes de malveillance à l'encontre du système de clapet 9.

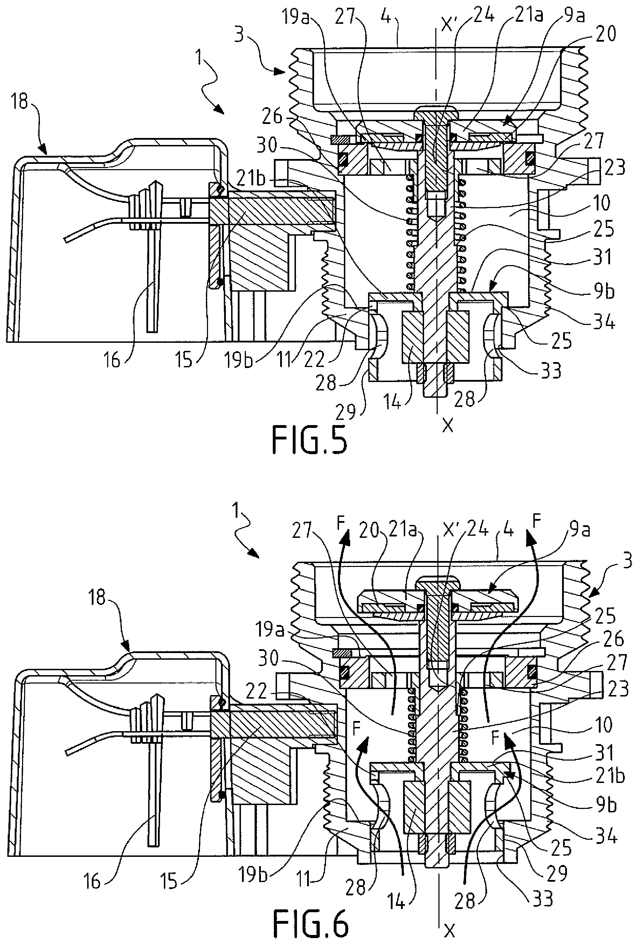

Les figures 5 et 6 représentent un quatrième exemple de réalisation dans lequel le système de clapet 9 comprend une première partie de clapet 9a et une deuxième partie de clapet 9b. La première partie de clapet 9a correspond au système de clapet 9 de l'exemple de réalisation de la figure 1, alors que la deuxième partie de clapet 9b correspond au système de clapet 9 de l'exemple de réalisation figures 2 et 3. Ainsi, le quatrième exemple de réalisation combine :
- un organe de fermeture haut 21a dont la conception est identique, ou pour le moins similaire, à l'organe de fermeture 21 du premier exemple de réalisation de la figure 1, c'est-à-dire avantageusement un organe sensiblement discoïde qui, en position de fermeture, entre en contact avec un col annulaire haut 19a similaire au col annulaire 19 de l'exemple de réalisation de la figure 1,
- un organe de fermeture bas 21b dont la conception est identique, ou pour le moins similaire, à l'organe de fermeture 21 du deuxième exemple de réalisation des figures 2 et 3, c'est-à-dire préférentiellement un organe sensiblement discoïde à partir duquel s'élève une jupe de coulissement 29, l'organe de fermeture bas 21b étant conçu, en position de fermeture, pour entrer en contact avec un col annulaire bas 19b similaire au col annulaire 19 du deuxième exemple de réalisation.

Tel qu'illustré, dans cet exemple de réalisation l'organe de rappel 30 est préférentiellement disposé entre lesdits organe de fermeture haut 21a et organe de fermeture bas 21b.

Le système de surveillance 1 peut fonctionner par exemple de la façon qui suit, cet exemple n'étant absolument pas limitatif, et étant donné à titre purement illustratif.

Un utilisateur puise de l'eau de distribution à partir de l'orifice de sortie 4 du dispositif de distribution 2, en manœuvrant le moyen de commande de la source d'eau 12. Cette action de puisage d'eau entraîne un passage du système de clapet 9 en position ouverte, de sorte que le moyen de surveillance 16 émet un message témoignant du changement de position du système de clapet 9. Le message est reçu par le réseau de réception du message, lequel lance un chronométrage du temps d'ouverture. Lorsque l'utilisateur cesse de puiser l'eau de distribution, il manœuvre à nouveau le moyen de commande de la source d'eau 12, de manière à couper le flux d'eau de distribution dans le conduit de sortie 3, de sorte que le système de clapet 9 passe en position fermée. Par conséquent, le moyen de surveillance 16 émet à nouveau un message témoignant du changement de position du système de clapet 9, ledit message étant reçu par le réseau de réception, lequel arrête le chronométrage du temps d'ouverture.

Alternativement, le chronométrage du temps d'ouverture peut être effectué avantageusement par le moyen de surveillance 16. Dans ce cas alternatif, le moyen de surveillance 16 émettra préférentiellement un message contenant le temps d'ouverture ainsi chronométré.

Quelle que soit la solution retenue, le temps d'ouverture du système de clapet 9 étant ainsi mesuré, un opérateur peut être informé facilement dudit temps d'ouverture du système de clapet 9, et donc d'une estimation de la quantité d'eau de distribution consommée.

L'invention concerne également en tant que tel un dispositif de distribution 2 d'eau équipé d'un système de surveillance 1 tel que décrit ci-avant, le dispositif de distribution 2 de l'invention correspondant avantageusement à celui qui a été décrit ci-avant.

Tel que décrit ci-avant, le dispositif de distribution 2 forme préférentiellement une bouche de lavage, d'arrosage ou d'incendie, et comprend une chambre supérieure 6 au sein de laquelle le conduit de sortie 3 débouche, ladite chambre supérieure 6 étant dotée d'une ouverture d'accès supérieure 7 pourvue d'un moyen de fermeture 8 du genre plaque métallique ou grille métallique.

## Revendications

1. Système de surveillance (1) de la distribution d'eau d'un dispositif de distribution (2) d'eau du genre poteau ou bouche, de lavage, d'arrosage, ou d'incendie, ledit dispositif de distribution (2) comprenant un conduit de sortie (3) par l'intermédiaire duquel de l'eau de distribution est destinée à être distribuée, le système de surveillance (1) comprenant :
- un système de clapet (9, 9a, 9b) conçu pour être monté au sein du conduit de sortie (3) et étant conçu pour se déplacer entre :
o une position ouverte sous l'action d'un débit d'eau de distribution dans le conduit de sortie (3), lorsque ledit débit d'eau est supérieur à un seuil de débit prédéterminé, et
o une position fermée lorsque le débit d'eau est inférieur audit seuil de débit, ledit système de clapet (9, 9a, 9b) étant conçu pour obstruer partiellement le conduit de sortie (3) en position fermée, le système de clapet (9, 9a, 9b) étant conçu pour que ladite obstruction ne soit pas étanche ;
- un moyen de détection (14, 15) apte à détecter au moins l'une des deux positions ouverte ou fermée du système de clapet (9, 9a, 9b) afin de fournir une information de position détectée, et
- un moyen de surveillance (16) de la distribution d'eau conçu pour, sur la base de l'information de position détectée par ledit moyen de détection (14, 15), générer un message représentatif de la distribution d'eau par ledit dispositif de distribution (2),
ledit moyen de surveillance (16) comprenant un moyen de mesure du temps pendant lequel le système de clapet (9, 9a, 9b) est en position ouverte

2. Système de surveillance (1) selon la revendication précédente, **caractérisé en ce que** le conduit de sortie (3) est formé par un raccord amovible comprenant un moyen de raccordement (11) au dispositif de distribution (2), par exemple par vissage dudit raccord amovible sur ledit dispositif de distribution (2).

3. Système de surveillance (1) selon l'une quelconque des revendications précédentes, **caractérisé en ce que** le conduit de sortie (3) comporte un orifice de sortie (4) pourvu d'un moyen de connexion (13) dudit conduit de sortie (3) avec un embout (5), du genre tuyau, lance, ou pistolet, le moyen de connexion (13) étant par exemple formé par des moyens de vissage de ce dernier avec ledit embout (5).

4. Système de surveillance (1) selon l'une quelconque des revendications précédentes, **caractérisé en ce que** le conduit de sortie (3) est pourvu d'un col annulaire (19, 19a, 19b) interne, le système de clapet (9, 9a, 9b) comprenant un organe de fermeture (21, 21a, 21b), par exemple de forme sensiblement discoïde, conçu pour :
- en position fermée du système de clapet (9, 9a, 9b), entrer en contact à sa périphérie avec ledit col annulaire (19, 19a, 19b) de façon à obstruer au moins partiellement le conduit de sortie (3), avec ledit col annulaire (19, 19a, 19b), et
- en position ouverte du système de clapet (9, 9a, 9b), être positionné à l'écart dudit col annulaire (19, 19a, 19b) de manière à ouvrir un passage de circulation (22) entre ledit col annulaire (19, 19a, 19b) et ledit organe de fermeture (21, 21a, 21b).

5. Système de surveillance (1) selon la revendication précédente, **caractérisé en ce que** le système de clapet (9, 9a, 9b) comprend une tige de coulissement (23) solidaire de l'organe de fermeture (21, 21a, 21b), et par l'intermédiaire de laquelle ledit organe de fermeture (21, 21a, 21b) est destiné à coulisser le long du conduit de sortie (3), ce dernier étant pourvu d'un guide de tige (24) sur lequel ladite tige de coulissement (23) est montée à coulissement.

6. Système de surveillance (1) selon l'une quelconque des revendications 4 ou 5, **caractérisé en ce que** le système de clapet (9, 9a, 9b) comprend une jupe de coulissement (29) s'élevant à partir de l'organe de fermeture (21, 21a, 21b) et étant conformée pour coulisser au sein du col annulaire (19, 19a, 19b), afin que le système de clapet (9, 9a, 9b) puisse coulisser au sein du conduit de sortie (3) par l'intermédiaire de ladite jupe de coulissement (29), cette dernière étant percée d'au moins une ouverture de passage (28) formant le passage de circulation (22) lorsque le système de clapet (9, 9a, 9b) est en position ouverte.

7. Système de surveillance (1) selon l'une quelconque des revendications précédentes, **caractérisé en ce que** le conduit de sortie (3) s'étend de façon sensiblement verticale par rapport au sol, le système de clapet (9, 9a, 9b) étant conçu pour se déplacer de façon sensiblement verticale le long du conduit de sortie (3), la position ouverte correspondant à une position haute du système de clapet (9, 9a, 9b), et la position fermée à une position basse de ce dernier.

8. Système de surveillance (1) selon la revendication précédente, **caractérisé en ce que** le système de clapet (9, 9a, 9b) comprend un flotteur conçu pour flotter sur l'eau de distribution de manière à ce que ce dernier contribue à faire passer, ou à maintenir, ledit système de clapet (9, 9a, 9b) en position ouverte en présence d'eau de distribution sous ledit système de clapet (9, 9a, 9b).

9. Système de surveillance (1) selon l'une quelconque des revendications précédentes, **caractérisé en ce que** le moyen de détection (14, 15) comprend d'une part un élément témoin (14) solidaire du système de clapet (9, 9a, 9b), et d'autre part un élément de référence (15) fixe, par exemple solidaire du conduit de sortie (3), et conçu pour interagir avec l'élément témoin (14), de sorte que ledit moyen de détection (14, 15) puisse évoluer entre un premier état E0 lorsque le système de clapet (9, 9a, 9b) est en position fermée et un deuxième état E1 lorsque le système de clapet (9, 9a, 9b) est en position ouverte.

10. Système de surveillance (1) selon la revendication précédente, **caractérisé en ce que** :
- l'élément témoin (14) est formé par un aimant (14) présentant un champ magnétique, et
- l'élément de référence (15) est formé par un interrupteur magnétique (15), du genre interrupteur à lame souple, conçu pour évoluer entre :
o l'un des états E0 ou E1 lorsque la distance entre l'aimant (14) et l'interrupteur magnétique (15) est inférieure à une distance d'activation prédéterminée, et
o l'autre des états E0 ou E1 lorsque la distance entre l'aimant (14) et l'interrupteur magnétique (15) est supérieure à ladite distance d'activation.

11. Système de surveillance (1) selon l'une quelconque des revendications 9 ou 10, **caractérisé en ce que** l'élément de référence (15) est disposé à la périphérie du conduit de sortie (3).

12. Système de surveillance (1) selon la revendication 5 et l'une quelconque des revendications 9 à 11, **caractérisé en ce que** l'élément témoin (14) est solidaire de la tige de coulissement (23), au voisinage d'une extrémité de cette dernière.

13. Système de surveillance (1) selon l'une quelconque des revendications précédentes, **caractérisé en ce que** le moyen de surveillance (16) comprend des moyens de transmission à distance, par exemple par signal magnétique, du message représentatif de la distribution d'eau.

14. Dispositif de distribution (2) d'eau équipé d'un système de surveillance (1) selon l'une quelconque des revendications précédentes.

15. Dispositif de distribution (2) selon la revendication précédente, **caractérisé en ce qu'**il forme une bouche de lavage, d'arrosage ou d'incendie, et comprend une chambre supérieure (6) au sein de laquelle le conduit de sortie (3) débouche, ladite chambre supérieure (6) étant dotée d'une ouverture d'accès supérieure (7) pourvue d'un moyen de fermeture (8) du genre plaque métallique ou grille métallique.

## Patentansprüche

1. System zur Überwachung (1) der Wasserverteilung einer Wasserverteilungsvorrichtung (2) vom Typ des Überflur- oder Unterflurhydranten zum Reinigen, Bewässern oder Brandlöschen, wobei die Verteilungsvorrichtung (2) eine Auslassleitung (3) aufweist, durch die das zu verteilende Wasser dazu bestimmt ist, verteilt zu werden, wobei das Überwachungssystem (1) aufweist:
- ein Ventilsystem (9, 9a, 9b), das ausgelegt ist, um in der Auslassleitung (3) angebracht zu werden, und ausgelegt ist, um sich zu bewegen zwischen:
o einer offenen Position unter der Einwirkung eines Durchflusses des zu verteilenden Wassers in der Auslassleitung (3), wenn der Wasserdurchfluss größer als eine vorbestimmte Durchflussschwelle ist, und
o einer geschlossenen Position, wenn der Wasserdurchfluss niedriger als die Durchflussschwelle ist, wobei das Ventilsystem (9, 9a, 9b) ausgelegt ist, um die Auslassleitung (3) teilweise in der geschlossenen Position zu blockieren, wobei das Ventilsystem (9, 9a, 9b) ausgelegt ist, damit die Blockierung nicht dicht ist,
- ein Erfassungsmittel (14, 15), das geeignet ist, mindestens eine der zwei Positionen, der offenen oder geschlossenen Position, des Ventilsystems (9, 9a, 9b) zu erfassen, um eine Information der erfassten Position bereitzustellen, und
- ein Mittel zur Überwachung (16) der Wasserverteilung, das ausgelegt ist, um auf der Grundlage der Information der Position, die von dem Erfassungsmittel (14, 15) erfasst ist, eine Nachricht zu erzeugen, die für die Wasserverteilung durch die Verteilungsvorrichtung (2) repräsentativ ist,
wobei das Mittel zur Überwachung (16) ein Mittel zur Messung der Zeit aufweist, während der das Ventilsystem (9, 9a, 9b) in der offenen Position ist.

2. System zur Überwachung (1) nach dem vorhergehenden Anspruch, **dadurch gekennzeichnet, dass** die Auslassleitung (3) durch einen abnehmbaren Anschluss gebildet ist, der ein Mittel zum Anschließen (11) an die Verteilungsvorrichtung (2), zum Beispiel durch Schrauben des abnehmbaren Anschlusses auf die Verteilungsvorrichtung (2), aufweist.

3. System zur Überwachung (1) nach einem der vorhergehenden Ansprüche, **dadurch gekennzeichnet, dass** die Auslassleitung (3) eine Auslassöffnung (4) aufweist, die mit einem Verbindungsmittel (13) der Auslassleitung (3) mit einem Anschlussstück (5) der Art eines Schlauchs, einer Düse oder einer Spritz-Pistole versehen ist, wobei das Verbindungsmittel (13) beispielsweise durch Mittel zum Verschrauben dieses Letzteren mit dem Anschlussstück (5) gebildet ist.

4. System zur Überwachung (1) nach einem der vorhergehenden Ansprüche, **dadurch gekennzeichnet, dass** die Auslassleitung (3) mit einem inneren ringförmigen Kragen (19, 19a, 19b) versehen ist, wobei das Ventilsystem (9, 9a, 9b) ein Verschlussorgan (21, 21a, 21b) aufweist, beispielsweise von im Wesentlichen scheibenförmiger Form, das ausgelegt ist, um:
- in geschlossener Position des Ventilsystems (9, 9a, 9b) an seinem Umfang mit dem ringförmigen Kragen (19, 19a, 19b) derart in Kontakt zu kommen, um die Auslassleitung (3) mit dem ringförmigen Kragen (19, 19a, 19b) mindestens teilweise zu blockieren, und
- in offener Position des Ventilsystems (9, 9a, 9b) von dem ringförmigen Kragen (19, 19a, 19b) weg derart angeordnet zu sein, um einen Zirkulationsdurchgang (22) zwischen dem ringförmigen Kragen (19, 19a, 19b) und dem Verschlussorgan (21, 21a, 21b) zu öffnen.

5. System zur Überwachung (1) nach dem vorhergehenden Anspruch, **dadurch gekennzeichnet, dass** das Ventilsystem (9, 9a, 9b) eine Gleitstange (23) aufweist, die mit dem Verschlussorgan (21, 21a, 21b) fest verbunden ist, und durch die das Verschlussorgan (21, 21a, 21b) bestimmt ist, entlang der Auslassleitung (3) zu gleiten, wobei diese Letztere mit einer Stangenführung (24) versehen ist, auf der die Gleitstange (23) gleitend angebracht ist.

6. System zur Überwachung (1) nach einem der Ansprüche 4 oder 5, **dadurch gekennzeichnet, dass** das Ventilsystem (9, 9a, 9b) eine Gleitschürze (29) aufweist, die sich ausgehend von dem Verschlussorgan (21, 21a, 21b) erhebt und ausgebildet ist, um in dem ringförmigen Kragen (19, 19a, 19b) zu gleiten, damit das Ventilsystem (9, 9a, 9b) in der Auslassleitung (3) über die Gleitschürze (29) gleiten kann, wobei diese Letztere von mindestens einer Durchgangsöffnung (28) durchbohrt ist, die den Zirkulationsdurchgang (22) bildet, wenn das Ventilsystem (9, 9a, 9b) in der offenen Position ist.

7. System zur Überwachung (1) nach einem der vorhergehenden Ansprüche, **dadurch gekennzeichnet, dass** sich die Auslassleitung (3) im Wesentlichen senkrecht zum Boden erstreckt, wobei das Ventilsystem (9, 9a, 9b) ausgelegt ist, um sich im Wesentlichen senkrecht entlang der Auslassleitung (3) zu bewegen, wobei die offene Position einer oberen Position des Ventilsystems (9, 9a, 9b) und die geschlossene Position einer unteren Position dieses Letzteren entspricht.

8. System zur Überwachung (1) nach dem vorhergehenden Anspruch, **dadurch gekennzeichnet, dass** das Ventilsystem (9, 9a, 9b) einen Schwimmer aufweist, der ausgelegt ist, um auf dem zu verteilenden Wasser derart zu schwimmen, dass dieser Letztere dazu beiträgt, das Ventilsystem (9, 9a, 9b) bei Vorhandensein von zu verteilendem Wasser unter dem Ventilsystem (9, 9a, 9b) in die offene Position übergehen zu lassen oder darin zu halten.

9. System zur Überwachung (1) nach einem der vorhergehenden Ansprüche, **dadurch gekennzeichnet, dass** das Erfassungsmittel (14, 15) einerseits ein Anzeigeelement (14), das mit dem Ventilsystem (9, 9a, 9b) fest verbunden ist, und andererseits ein festes Referenzelement (15) aufweist, das beispielsweise mit der Auslassleitung (3) fest verbunden ist und das ausgelegt ist, um mit dem Anzeigeelement (14) derart zusammenzuwirken, dass das Erfassungsmittel (14, 15) zwischen einem ersten Zustand E0, wenn sich das Ventilsystem (9, 9a, 9b) in der geschlossenen Position befindet, und einem zweiten Zustand E1 wechseln kann, wenn sich das Ventilsystem (9, 9a, 9b) in der offenen Position befindet.

10. System zur Überwachung (1) nach dem vorhergehenden Anspruch, **dadurch gekennzeichnet, dass**:
- das Anzeigeelement (14) durch einen Magneten (14) gebildet ist, der ein Magnetfeld aufweist, und
- das Referenzelement (15) durch einen Magnetschalter (15) vom Typ des Reedschalters gebildet ist, der ausgelegt ist, um zwischen:
o einem der Zustände E0 oder E1 zu wechseln, wenn der Abstand zwischen dem Magneten (14) und dem Magnetschalter (15) kleiner als ein vorbestimmter Aktivierungsabstand ist, und
o dem anderen der Zustände E0 oder E1 zu wechseln, wenn der Abstand zwischen dem Magneten (14) und dem Magnetschalter (15) größer als der Aktivierungsabstand ist.

11. System zur Überwachung (1) nach einem der Ansprüche 9 oder 10, **dadurch gekennzeichnet, dass** das Referenzelement (15) am Umfang der Auslassleitung (3) angeordnet ist.

12. System zur Überwachung (1) nach Anspruch 5 und einem der Ansprüche 9 bis 11, **dadurch gekennzeichnet, dass** das Anzeigeelement (14) mit der Gleitstange (23) in der Nähe eines Endes dieser Letzteren fest verbunden ist.

13. System zur Überwachung (1) nach einem der vorhergehenden Ansprüche, **dadurch gekennzeichnet, dass** das Mittel zur Überwachung (16) Mittel zur Fernübertragung, beispielsweise durch Magnetsignal, der Nachricht, die für die Wasserverteilung repräsentativ ist, aufweist.

14. Wasserverteilungsvorrichtung (2), die mit einem System zur Überwachung (1) nach einem der vorhergehenden Ansprüche ausgestattet ist.

15. Wasserverteilungsvorrichtung (2) nach dem vorhergehenden Anspruch, **dadurch gekennzeichnet, dass** sie einen Unterflurhydranten zum Reinigen, Bewässern oder Brandlöschen bildet und eine obere Kammer (6) aufweist, in die die Auslassleitung (3) mündet, wobei die obere Kammer (6) mit einer oberen Zugangsöffnung (7) ausgestattet ist, die mit einem Verschlussmittel (8) des Typs einer Metallplatte oder eines Metallgitters versehen ist.

## Claims

1. System (1) for monitoring the distribution of water from a water-distribution device (2) of the standpipe or hydrant type, for washing, sprinkling or fire-fighting, said distribution device (2) comprising an outlet pipe (3) by means of which the distribution water is intended to be distributed, the monitoring system (1) comprising:
- a valve system (9, 9a, 9b) designed to be mounted in the outlet pipe (3) and being designed to move between:
o an open position under the action of a flow of distribution water in the outlet pipe (3), when said flow of water is above a predetermined flow threshold, and
o a closed position when the flow of water is below said flow threshold, said valve system (9, 9a, 9b) being designed to partially obstruct the outlet pipe (3) in the closed position, the valve system (9, 9a, 9b) being designed so that said obstruction is not watertight;
- a detection means (14, 15) able to detect at least one of the two open or closed positions of the valve system (9, 9a, 9b) in order to provide detected-position information, and
- a means (16) for monitoring the distribution of water designed so as, on the basis of the position information detected by said detection means (14, 15), to generate a message representing the distribution of water by said distribution device (2),
said monitoring means (16) comprising a means for measuring the time during which the valve system (9, 9a, 9b) is in the open position.

2. Monitoring system (1) according to the preceding claim, **characterised in that** the outlet pipe (3) is formed by a removable coupling comprising a means (11) for connection to the distribution device (2), for example by screwing said removable coupling onto said distribution device (2).

3. Monitoring system (1) according to any one of the preceding claims, **characterised in that** the outlet pipe (3) comprises an outlet orifice (4) provided with a means (13) for connecting said outlet pipe (3) with a connecting piece (5), of the tube, lance or gun type, the connection means (13) being for example formed by means for screwing it with said connecting piece (5).

4. Monitoring system (1) according to any one of the preceding claims, **characterised in that** the outlet pipe (3) is provided with an internal annular neck (19, 19a, 19b), the valve system (9, 9a, 9b) comprising a closure member (21, 21a, 21b), for example substantially discoid in shape, designed so as:
- in the closed position of the valve system (9, 9a, 9b), to come into contact at its periphery with said annular neck (19, 19a, 19b) so as to at least partially obstruct the outlet pipe (3), with said annular neck (19, 19a, 19b), and
- in the open position of the valve system (9, 9a, 9b), to be positioned away from said annular neck (19, 19a, 19b) so as to open a flow passage (22) between said annular neck (19, 19a, 19b) and said closure member (21, 21a, 21b).

5. Monitoring system (1) according to the preceding claim, **characterised in that** the valve system (9, 9a, 9b) comprises a sliding rod (23) secured to the closure member (21, 21a, 21b), and by means of which said closure member (21, 21a, 21b) is intended to slide along the outlet pipe (3), the latter being provided with a rod guide (24) on which said sliding rod (23) is slidably mounted.

6. Monitoring system (1) according to either one of claims 4 or 5, **characterised in that** the valve system (9, 9a, 9b) comprises a sliding skirt (29) arising from the closure member (21, 21a, 21b) and being conformed so as to slide in the annular neck (19, 19a, 19b), in order for the valve system (9, 9a, 9b) to be able to slide in the outlet pipe (3) by means of said sliding skirt (29), the latter being pierced with at least one passage opening (28) forming the flow passage (22) when the valve system (9, 9a, 9b) is in the open position.

7. Monitoring system (1) according to any one of the preceding claims, **characterised in that** the outlet pipe (3) extends substantially vertically with respect to the ground, the valve system (9, 9a, 9b) being designed so as to move substantially vertically along the outlet pipe (3), the open position corresponding to a high position of the valve system (9, 9a, 9b), and the closed position to a low position thereof.

8. Monitoring system (1) according to the preceding claim, **characterised in that** the valve system (9, 9a, 9b) comprises a float designed to float on the distribution water so that the latter helps to move, or maintain, said valve system (9, 9a, 9b) to or in the open position in the presence of distribution water under said valve system (9, 9a, 9b).

9. Monitoring system (1) according to any one of the preceding claims, **characterised in that** the detection means (14, 15) comprises firstly a telltale element (14) secured to the valve system (9, 9a, 9b), and secondly a fixed reference element (15), for example secured to the outlet pipe (3), and designed to interact with the telltale element (14), so that said detection means (14, 15) can change between a first state E0 when the valve system (9, 9a, 9b) is in the closed position and a second state E1 when the valve system (9, 9a, 9b) is in the open position.

10. Monitoring system (1) according to the preceding claim, **characterised in that**:
- the telltale element (14) is formed by a magnet (14) having a magnetic field, and
- the reference element (15) is formed by a magnetic switch (15), of the flexible-leaf switch type, designed to change between:
∘ one of the states E0 or E1 when the distance between the magnet (14) and the magnetic switch (15) is less than a predetermined activation distance, and
o the other one of the states E0 and E1 when the distance between the magnet (14) and the magnetic switch (15) is greater than said activation distance.

11. Monitoring system (1) according to either one of claims 9 or 10, **characterised in that** the reference element (15) is disposed at the periphery of the outlet pipe (3).

12. Monitoring system (1) according to claim 5 and any one of claims 9 to 11, **characterised in that** the telltale element (14) is secured to the sliding rod (23), in the vicinity of one end thereof.

13. Monitoring system (1) according to any one of the preceding claims, **characterised in that** the monitoring means (16) comprises means for the remote transmission, for example by magnetic signal, of the message representing the distribution of water.

14. Water-distribution device (2) equipped with a monitoring system (1) according to any one of the preceding claims.

15. Distribution device (2) according to the preceding claim, **characterised in that** it forms a washing, sprinkling or fire-fighting hydrant, and comprises a top chamber (6) in which the outlet pipe (3) emerges, said top chamber (6) being provided with a top access opening (7) provided with a closure means (8) of the metal plate or metal grille type.
